# EUROPÄISCHE PATENTSCHRIFT

(11) **EP 3 765 324 B1**
(45) Veröffentlichungstag und Bekanntmachung des Hinweises auf die Patenterteilung: **06.09.2023**
(21) Anmeldenummer: 19706922.2
(22) Anmeldetag: 13.02.2019
(51) Int. Cl.: B60K 37/06

(54) **VERFAHREN, VORRICHTUNG UND COMPUTERLESBARES SPEICHERMEDIUM MIT INSTRUKTIONEN ZUR STEUERUNG EINER ANZEIGE EINER AUGMENTED-REALITY-DISPLAY-VORRICHTUNG FÜR EIN KRAFTFAHRZEUG**
METHOD, DEVICE AND COMPUTER-READABLE STORAGE MEDIUM WITH INSTRUCTIONS FOR CONTROLLING A DISPLAY OF AN AUGMENTED REALITY DISPLAY DEVICE FOR A MOTOR VEHICLE
PROCÉDÉ, DISPOSITIF ET SUPPORT D'ENREGISTREMENT LISIBLE PAR ORDINATEUR DOTÉ D'INSTRUCTIONS POUR LA COMMANDE D'UN AFFICHAGE D'UN DISPOSITIF D'AFFICHAGE À RÉALITÉ AUGMENTÉE POUR UN VÉHICULE AUTOMOBILE

(30) Priorität: 15.03.2018 DE 102018203927
(43) Veröffentlichungstag der Anmeldung: 20.01.2021
(73) Patentinhaber: VOLKSWAGEN AKTIENGESELLSCHAFT, 38440 Wolfsburg (DE)
(72) Erfinder: KASSNER, Astrid, 10117 Berlin (DE); HENNING, Matthias, 10713 Berlin (DE); SCHMIDT, Norwin, 25980 Westerland (DE)
(86) Internationale Anmeldenummer: PCT/EP2019/053584
(87) Internationale Veröffentlichungsnummer: WO 2019/174841

(56) Entgegenhaltungen:
- EP-A1- 2 412 557
- EP-A1- 3 248 824
- WO-A2-2017/195026
- US-B1- 9 809 165

## Beschreibung

Die vorliegende Erfindung betrifft ein Verfahren, eine Vorrichtung und ein computerlesbares Speichermedium mit Instruktionen zur Steuerung einer Anzeige einer Augmented-Reality-Display-Vorrichtung für ein Kraftfahrzeug. Die Erfindung betrifft weiterhin ein Kraftfahrzeug, in dem ein erfindungsgemäßes Verfahren oder eine erfindungsgemäße Vorrichtung eingesetzt wird.

Die Fahrzeugnavigation wird in Zukunft vermehrt Darstellungen in einem Head-up Display (HUD) nutzen. Dabei werden die Lichtstrahlen eines im Armaturenbrett verbauten Displays über mehrere Spiegel und Linsen gefaltet und über eine Projektionsfläche in das Auge des Fahrers gespiegelt, sodass dieser ein virtuelles Bild außerhalb des Fahrzeugs wahrnimmt. Als Projektionsfläche dient im Automobilbereich oftmals die Frontscheibe, deren gekrümmte Form bei der Darstellung berücksichtigt werden muss. Als Alternative wird zum Teil auch eine zusätzliche Scheibe aus Glas oder Kunststoff genutzt, die zwischen dem Fahrer und der Frontscheibe auf dem Armaturenbrett angeordnet ist. Durch die optische Überlagerung von Anzeige und Fahrszene sind weniger Kopf- und Augenbewegungen zum Ablesen der Informationen notwendig. Zudem verringert sich der Adaptationsaufwand für die Augen, da abhängig von der virtuellen Distanz der Anzeige weniger bis gar nicht akkommodiert werden muss. Aktuelle Serien-HUDs beschränken sich jedoch auf Anzeigen direkt unter dem primären Sichtbereich des Fahrers. Diese Anzeigetechnologie reduziert zwar Blickabwendungen von der Straße, hat aber weiterhin den Nachteil, dass die präsentierten Informationen interpretiert und auf die reale Situation übertragen werden müssen, da sie nicht in der realen Szene registriert sind. Dies kann in komplexen Situationen einen mental beanspruchenden kognitiven Prozess darstellen.

Vor diesem Hintergrund beschreibt die WO 2002/010838 A1 ein Navigationsverfahren in einem Kraftfahrzeug, bei dem ein Richtungssymbol auf einer Windschutzscheibe als Anzeige eines Navigationsgerätes in Abhängigkeit von einer gewählten Route dargestellt wird. Die Darstellung des Richtungssymbols erfolgt dabei in Abhängigkeit von Signalen von einer Blickrichtungserkennung. Bei Annäherung an eine zu wählende Abzweigung wandert das Richtungssymbol in Richtung der Abzweigung auf der Windschutzscheibe. Zudem kann das Richtungssymbol seine Größe oder Farbe ändern.

Die DE 10 2016 203 080 A1 beschreibt ein Verfahren zum Betreiben eines Head-up-Displays für ein Kraftfahrzeug, bei dem in Abhängigkeit von aktuellen Fahrdaten mittels des Head-up-Displays Hinweise in das Sichtfeld des Fahrers projiziert werden. Mittels eines satellitengestützten Navigationssystems werden eine aktuelle Position und Fahrtrichtung oder Fahrstrecke des Kraftfahrzeugs erfasst. Weiterhin wird ein Manöverpunkt im Bewegungsweg des Kraftfahrzeugs ermittelt. In Abhängigkeit von der Entfernung des Kraftfahrzeugs zu dem Manöverpunkt werden ein oder mehrere Manöverpfeile projiziert. Die Manöverpfeile werden dabei als virtuelle Leitplanke angezeigt.

Mit der stetigen Weiterentwicklung von Virtual- und Augmented-Reality-Technologien und -Anwendungen finden diese auch Einzug in das Automobil, insbesondere für die Anzeigen von Head-up-Displays. Bei Augmented Reality (AR), auf Deutsch "erweiterte Realität", handelt es sich um die Anreicherung der realen Welt durch virtuelle Elemente, die im dreidimensionalen Raum ortskorrekt registriert sind und eine Echtzeitinteraktion erlauben. Da sich in der Fachwelt im deutschsprachigen Raum der Ausdruck "Augmented Reality" gegenüber dem Ausdruck "erweiterte Realität" durchgesetzt hat, wird im Folgenden ersterer benutzt. Synonym wird auch der Ausdruck "Mixed Reality" verwendet. Für die Darstellung von AR-Anzeigen können alternativ auch Augmented-Reality-Brillen genutzt werden. Eine Augmented-Reality-Brille wird wie eine normale Brille getragen, weist aber eine oder mehrere Projektionseinheiten oder Anzeigen auf, mit deren Hilfe dem Träger der Brille Informationen vor die Augen oder direkt auf die Netzhaut projiziert werden können. Die Brille ist dabei so gestaltet, dass der Träger auch die Umgebung wahrnehmen kann.

Durch Markieren von Objekten und Einblenden von Informationen an ihrem realen Bezugsort, d.h. durch eine kontaktanaloge Darstellung, lassen sich umweltbezogene Informationen im Sichtfeld des Fahrers direkt darstellen. Diese direkte grafische Anreicherung der Umwelt in Form von Augmented Reality kann die kognitiven Transferanforderungen erheblich reduzieren. Augmented Reality bietet vielfältige Anwendungsmöglichkeiten zur Unterstützung des Fahrers durch kontaktanaloge Markierung von Fahrbahnen und Objekten, insbesondere für die Fahrzeugnavigation. Während klassische Navigationsanzeigen in herkömmlichen Head-up-Displays in der Regel schematische Darstellungen anzeigen, z.B. einen rechtwinklig verlaufenden Pfeil nach rechts als Zeichen dafür, dass bei nächster Gelegenheit rechts abgebogen werden soll, bieten AR-Anzeigen wesentlich effektivere Möglichkeiten.

Viele augmentierte Navigationsdarstellungen beinhalten eine Navigationsmarkierung, die in die abzubiegende Straße hineinragt, z.B. einen Teppich oder einen Pfeil, der auf dem Straßenbelag liegt. Diese Navigationsmarkierung kann für den Fahrer allerdings schwierig wahrnehmbar sein, da die Markierung bei größerer Entfernung eine Höhe von nur wenigen Pixeln des Displays haben kann, mit dem die Markierung erzeugt wird. Zudem ist diese Form der Darstellung bei den zur Zeit diskutierten Anzeigegrößen von Head-up-Displays nicht umsetzbar, da die abzweigende Straße regelmäßig außerhalb des Anzeigebereichs liegt.

Vor diesem Hintergrund beschreibt die EP 3 248 824 A1 ein Head-up-Display mit einer Erzeugungsvorrichtung für Richtungsinformationen, einer Verlagerungsvorrichtung und einem Anzeigesystem. Die Erzeugungsvorrichtung erzeugt Richtungsinformationen, die auf einer Straßenoberfläche vor einem Fahrzeug eingeblendet werden. Die Richtungsinformation stellt eine Fahrtrichtung dar, der das Fahrzeug folgen soll. Wenn die Richtungsinformationen Richtungsänderungsinformationen enthalten, um eine Änderung der Fahrtrichtung darzustellen, verlagert die Verlagerungsvorrichtung zumindest einen Teil derjenigen Richtungsänderungsinformationen, die außerhalb eines Anzeigebereichs liegen, in den Anzeigebereich. Das Anzeigesystem zeigt die Richtungsinformationen innerhalb des Anzeigebereichs als virtuelles Bild an. Die Richtungsinformationen können in Form von Pfeilen dargestellt werden.

Die EP 2 412 557 A1 beschreibt ein fahrzeugmontiertes Anzeigesystem mit einem Abschnitt zur Erfassung von Vorwärtsinformationen, einem Abschnitt zur Erfassung von Informationen über vorausfahrende Fahrzeuge, einem Abschnitt zur Schätzung der Position eines Auges eines Betrachters und einem Abschnitt zur Bildprojektion. Der Abschnitt zur Bildprojektion ist so konfiguriert, dass er einen Lichtstrahl erzeugt, der Bildinformationen einschließlich eines Anzeigeobjekts enthält, und dass er den Lichtstrahl auf das Auge des Betrachters projiziert. Der Abschnitt zur Bildprojektion schätzt ein Sichtbild des Betrachters, der den Kurs vor dem eigenen Fahrzeug betrachtet. Der Abschnitt zur Bildprojektion weist zudem einen Abschnitt zur Erzeugung von Bilddaten auf, der so konfiguriert ist, dass er das Anzeigeobjekt erzeugt. Das Anzeigeobjekt kann beispielsweise ein Pfeil sein.

Die WO 2017/195026 A2 beschreibt ein Head-up-Display mit einer variablen Brennebene. Das Head-up-Display enthält eine Projektionsvorrichtung zum Erzeugen von Licht, das für mindestens eine virtuelle Grafik repräsentativ ist, eine Abbildungsmatrix zum Projizieren des erzeugten Lichts auf mindestens eine Bildebene, eine Anzeigevorrichtung zum Anzeigen der mindestens einen virtuellen Grafik auf der mindestens einen Bildebene und eine Translationsvorrichtung zum dynamischen Ändern einer Position der Abbildungsmatrix relativ zu der Anzeigevorrichtung, die zumindest teilweise auf einem vorbestimmten Betriebsparameter basiert, um einen Brennweitenabstand zwischen der Anzeigevorrichtung und der mindestens einen Bildebene dynamisch zu ändern. Die virtuelle Grafik kann beispielsweise ein Pfeil sein.

Es ist eine Aufgabe der Erfindung, Lösungen für die Steuerung einer Anzeige einer Augmented-Reality-Display-Vorrichtung für ein Kraftfahrzeug aufzuzeigen, die für den Fahrer gut wahrnehmbare Markierungen generieren.

Diese Aufgabe wird durch ein Verfahren mit den Merkmalen des Anspruchs 1, durch ein computerlesbares Speichermedium mit Instruktionen gemäß Anspruch 8 und durch eine Vorrichtung mit den Merkmalen des Anspruchs 9 gelöst. Bevorzugte Ausgestaltungen der Erfindung sind Gegenstand der abhängigen Ansprüche.

Gemäß einem ersten Aspekt der Erfindung umfasst ein Verfahren zur Steuerung einer Anzeige einer Augmented-Reality-Display-Vorrichtung für ein Kraftfahrzeug die Schritte:
- Bestimmen eines Zielmanövers des Kraftfahrzeugs;
- Bestimmen eines Ausführungsortes des Zielmanövers;
- Generieren einer Zielmanövermarkierung für eine Anzeige durch die Augmented-Reality-Display-Vorrichtung; und
- Ausgeben der Zielmanövermarkierung zur Anzeige durch die Augmented-Reality-Display-Vorrichtung dergestalt, dass die Zielmanövermarkierung ortsfest im Bereich des Ausführungsortes des Zielmanövers senkrecht auf einer vom Kraftfahrzeug zu befahrenden Fahrspur stehend und in Querrichtung am Rand der zu befahrenden Fahrspur verortet dargestellt wird.

Gemäß einem weiteren Aspekt der Erfindung enthält ein computerlesbares Speichermedium Instruktionen, die bei Ausführung durch einen Computer den Computer zur Ausführung der folgenden Schritte zur Steuerung einer Anzeige einer Augmented-Reality-Display-Vorrichtung für ein Kraftfahrzeug veranlassen:
- Bestimmen eines Zielmanövers des Kraftfahrzeugs;
- Bestimmen eines Ausführungsortes des Zielmanövers;
- Generieren einer Zielmanövermarkierung für eine Anzeige durch die Augmented-Reality-Display-Vorrichtung; und
- Ausgeben der Zielmanövermarkierung zur Anzeige durch die Augmented-Reality-Display-Vorrichtung dergestalt, dass die Zielmanövermarkierung ortsfest im Bereich des Ausführungsortes des Zielmanövers senkrecht auf einer vom Kraftfahrzeug zu befahrenden Fahrspur stehend und in Querrichtung am Rand der zu befahrenden Fahrspur verortet dargestellt wird.

Der Begriff Computer ist dabei breit zu verstehen. Insbesondere umfasst er auch Steuergeräte und andere prozessorbasierte Datenverarbeitungsvorrichtungen.

Gemäß einem weiteren Aspekt der Erfindung weist eine Vorrichtung zur Steuerung einer Anzeige einer Augmented-Reality-Display-Vorrichtung für ein Kraftfahrzeug auf:
- einen Manöverplaner zum Bestimmen eines Zielmanövers des Kraftfahrzeugs und zum Bestimmen eines Ausführungsortes des Zielmanövers;
- einen Grafikgenerator zum Generieren einer Zielmanövermarkierung für eine Anzeige durch die Augmented-Reality-Display-Vorrichtung; und
- einen Ausgang zum Ausgeben der Zielmanövermarkierung zur Anzeige durch die Augmented-Reality-Display-Vorrichtung dergestalt, dass die Zielmanövermarkierung ortsfest im Bereich des Ausführungsortes des Zielmanövers senkrecht auf einer vom Kraftfahrzeug zu befahrenden Fahrspur stehend und in Querrichtung am Rand der zu befahrenden Fahrspur verortet dargestellt wird.

Um den Nutzer mit einer konstanten Straßen- & Routenführung zu unterstützen, wird bei der erfindungsgemäßen Lösung eine Zielmanövermarkierung auf Höhe des nächsten Manöverortes, z.B. einer Kreuzung, über die Straße projiziert. Die Zielmanövermarkierung steht ähnlich wie ein Verkehrsschild oder ein anderes physisches Objekt senkrecht auf der Fahrbahn, d.h. sie schwebt nicht. Auf diese Weise wird eine zuverlässige Lokalisierung der Anzeige durch den Nutzer ermöglicht. Dadurch, dass die Zielmanövermarkierung auf der vom Kraftfahrzeug zu befahrenden Fahrspur verortet ist, ist die Zielmanövermarkierung bereits von weitem gut sichtbar. Der Begriff Fahrspur bezeichnet hier den vom Fahrzeug zu befahrenden Bereich der Straße, d.h. bei einem Abbiegemanöver folgt die Fahrspur der Trajektorie des Fahrzeugs. Bei der beschriebenen Lösung kann auf eine Anzeige, die den gesamten Abbiegeprozess begleitet, verzichtet werden. Da dem Fahrer die ab dem Zeitpunkt des Richtungswechsels notwendigen Handlungen in der Regel klar sind, ist die Notwendigkeit einer solchen begleitenden Anzeige ohnehin fraglich.

Erfindungsgemäß wird die Zielmanövermarkierung dergestalt dargestellt, dass sie in Querrichtung am Rand der vom Kraftfahrzeug zu befahrenden Fahrspur verortet ist. Bei dieser Positionierung erfolgt das Zielmanöver, beispielsweise ein Abbiegevorgang, direkt vor der angezeigten Zielmanövermarkierung. Der Nutzer erkennt daher zuverlässig, wo er das Zielmanöver ausführen muss. Bei einer Positionierung in der Fahrspurmitte müsste die Zielmanövermarkierung hingegen durchfahren werden, was für den Nutzer verwirrend sein kann.

Gemäß einem Aspekt der Erfindung wird die Zielmanövermarkierung dergestalt dargestellt, dass sie eventuell im Darstellungsbereich vorhandene Objekte oder andere Verkehrsteilnehmer überlagert. So kann sichergestellt werden, dass der Nutzer auch dann noch über das kommende Zielmanöver informiert ist, wenn der Ausführungsort des Zielmanövers beispielsweise durch ein anderes Fahrzeug verdeckt ist.

Gemäß einem Aspekt der Erfindung wird die Zielmanövermarkierung dergestalt dargestellt, dass sie mit Annäherung des Kraftfahrzeugs an den Ausführungsort des Zielmanövers zunehmend größer erscheint. Der Nutzer hat auf diese Weise stets einen visuellen Anker, bis zu dem er heranfahren kann und ab dem ein neues Fahrmanöver notwendig wird.

Gemäß einem Aspekt der Erfindung wird die Zielmanövermarkierung durch zumindest eine zusätzliche Navigationsdarstellung ergänzt. Mit der zusätzlichen Navigationsdarstellung, beispielsweise einer Entfernungsangabe bis zum Ausführungsort des Zielmanövers, können dem Nutzer weitere hilfreiche Informationen vermittelt werden, die ihn bei seinen Fahrmanövern unterstützen.

Gemäß einem Aspekt der Erfindung wechselt die Zielmanövermarkierung bei Annäherung des Kraftfahrzeugs an den Ausführungsort des Zielmanövers unterhalb einer Grenzdistanz zu einer erweiterten Darstellung. In der erweiterten Darstellung kann die Zielmanövermarkierung beispielsweise um zusätzliche Elemente erweitert werden, die das durchzuführende Manöver verdeutlichen. Der Wechsel der Darstellung erfolgt erst bei Unterschreiten einer Grenzdistanz, so dass die Zielmanövermarkierung bereits eine gewisse Mindestgröße erreicht hat. So ist sichergestellt, dass die erweiterte Darstellung mit ausreichender Auflösung dargestellt werden kann.

Gemäß einem Aspekt der Erfindung wird die Zielmanövermarkierung zur Verdeutlichung des auszuführenden Zielmanövers animiert dargestellt. Eine animierte Darstellung, beispielsweise ein über die Zielmanövermarkierung hinweglaufendes Aufleuchten, erlaubt eine zusätzliche Verdeutlichung des auszuführenden Manövers, z.B. der zu wählenden Fahrtrichtung.

Gemäß einem Aspekt der Erfindung ist die Augmented-Reality-Display-Vorrichtung eine Augmented-Reality-Head-up-Display-Vorrichtung oder eine Datenbrille. Sowohl ein Head-up-Display als auch eine Datenbrille sind ideal geeignet, um einem Nutzer Augmented-Reality-Inhalte zu vermitteln. Zudem ist mit einer zunehmenden Verbreitung beider Technologien zu rechnen, so dass die erfindungsgemäße Lösung mit nur geringem zusätzlichen Aufwand weitreichend umgesetzt werden kann.

Besonders vorteilhaft wird ein erfindungsgemäßes Verfahren oder eine erfindungsgemäße Vorrichtung in einem Fahrzeug, insbesondere einem Kraftfahrzeug, eingesetzt.

Weitere Merkmale der vorliegenden Erfindung werden aus der nachfolgenden Beschreibung und den angehängten Ansprüchen in Verbindung mit den Figuren ersichtlich.
- Fig. 1: zeigt schematisch ein Verfahren zur Steuerung einer Anzeige einer Augmented-Reality-Display-Vorrichtung für ein Kraftfahrzeug;
- Fig. 2: zeigt eine erste Ausführungsform einer Vorrichtung zur Steuerung einer Anzeige einer Augmented-Reality-Display-Vorrichtung für ein Kraftfahrzeug;
- Fig. 3: zeigt eine zweite Ausführungsform einer Vorrichtung zur Steuerung einer Anzeige einer Augmented-Reality-Display-Vorrichtung für ein Kraftfahrzeug;
- Fig. 4: stellt schematisch ein Kraftfahrzeug dar, in dem eine erfindungsgemäße Lösung realisiert ist;

- Fig. 5: zeigt schematisch einen allgemeinen Aufbau einer Head-up-Display-Vorrichtung für ein Kraftfahrzeug;
- Fig. 6: zeigt schematisch eine Augmented-Reality-Brille;
- Fig. 7: zeigt eine Darstellung einer Zielmanövermarkierung in einiger Entfernung;
- Fig. 8: zeigt die Darstellung der Zielmanövermarkierung aus Fig. 7 bei Annäherung an den Ausführungsort;
- Fig. 9: zeigt die Zielmanövermarkierung nach einem Wechsel zu einer erweiterten Darstellung; und
- Fig. 10: zeigt die Darstellung der Zielmanövermarkierung aus Fig. 7 im Falle eines verdeckenden Objektes.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

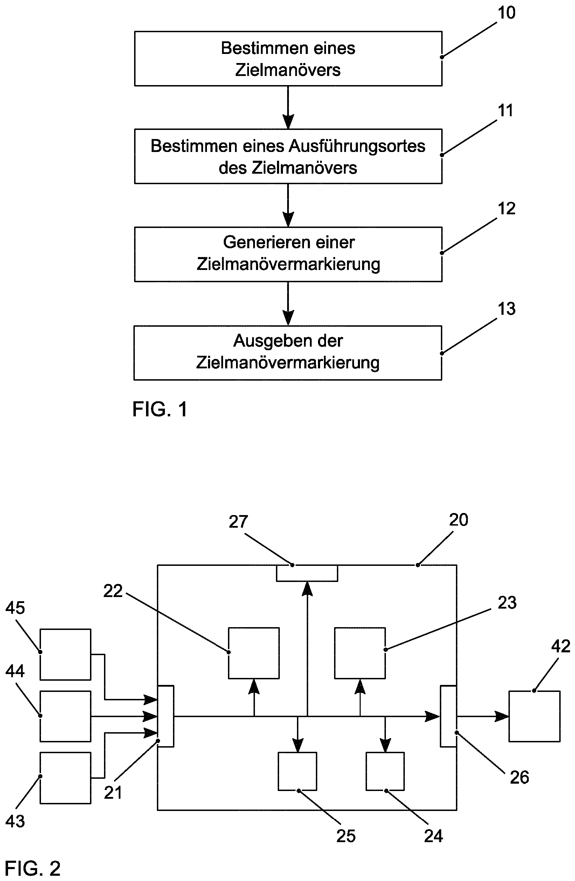

Fig. 1 zeigt schematisch ein Verfahren zur Steuerung einer Anzeige einer Augmented-Reality-Display-Vorrichtung für ein Kraftfahrzeug. In einem ersten Schritt 10 bestimmt ein Manöverplaner ein Zielmanöver des Kraftfahrzeugs. Weiterhin wird ein Ausführungsort des Zielmanövers bestimmt 11. Ein Grafikgenerator generiert 12 auf Grundlage dieser Informationen eine Zielmanövermarkierung für eine Anzeige durch die Augmented-Reality-Display-Vorrichtung. Die Zielmanövermarkierung wird schließlich zur Anzeige durch die Augmented-Reality-Display-Vorrichtung ausgegeben 13. Die Anzeige der Zielmanövermarkierung erfolgt dergestalt, dass die Zielmanövermarkierung ortsfest im Bereich des Ausführungsortes des Zielmanövers senkrecht auf einer vom Kraftfahrzeug zu befahrenden Fahrspur stehend dargestellt wird. Die Zielmanövermarkierung ist dabei in Querrichtung dabei am Rand der Fahrspur verortet. Zur Verdeutlichung der Annäherung des Kraftfahrzeugs an den Ausführungsort des Zielmanövers ist es sinnvoll, wenn die Zielmanövermarkierung zunehmend größer dargestellt wird. Dabei kann zusätzlich unterhalb einer Grenzdistanz zu einer erweiterten Darstellung der Zielmanövermarkierung gewechselt werden. Bei der Darstellung kann die Zielmanövermarkierung eventuell im Darstellungsbereich vorhandene Objekte oder andere Verkehrsteilnehmer überlagern. Auf Wunsch kann die Zielmanövermarkierung zudem um eine zusätzliche Navigationsdarstellung ergänzt oder animiert dargestellt werden. Anstelle einer Ausgabe der generierten Zielmanövermarkierung an ein Steuergerät der Augmented-Reality-Display-Vorrichtung kann alternativ lediglich eine Anweisung an das Steuergerät ausgegeben werden, eine entsprechende Zielmanövermarkierung zu generieren. Ebenso ist es möglich, dass das beschriebene Verfahren vollständig vom Steuergerät der Augmented-Reality-Display-Vorrichtung ausgeführt wird.

Fig. 2 zeigt eine vereinfachte schematische Darstellung einer ersten Ausführungsform einer Vorrichtung 20 zur Steuerung einer Anzeige einer Augmented-Reality-Display-Vorrichtung für ein Kraftfahrzeug. Die Vorrichtung 20 hat einen Eingang 21, über den beispielsweise Bilddaten einer Kamera 43, Daten eines Sensorsystems 44 oder Daten eines Navigationssystems 45 empfangen werden können. Das Sensorsystem 44 kann beispielsweise eine Umgebung des Kraftfahrzeugs erfassen. Die Vorrichtung 20 hat zudem einen Manöverplaner 22 zum Bestimmen eines Zielmanövers des Kraftfahrzeugs und zum Bestimmen eines Ausführungsortes des Zielmanövers. Ein Grafikgenerator 23 generiert unter anderem auf Basis der Informationen des Manöverplaners 22 eine Zielmanövermarkierung für eine Anzeige durch die Augmented-Reality-Display-Vorrichtung. Bei der Augmented-Reality-Display-Vorrichtung kann es sich beispielsweise um ein Head-up-Display oder eine Datenbrille handeln.

Über einen Ausgang 26 der Vorrichtung 20 wird die Zielmanövermarkierung an ein Steuergerät 42 der Augmented-Reality-Display-Vorrichtung ausgegeben. Alternativ kann auch lediglich eine Anweisung an ein Steuergerät 42 ausgegeben werden, eine entsprechende Zielmanövermarkierung zu generieren. Das Steuergerät 42 kann dann die Zielmanövermarkierung in eine Anzeige der Augmented-Reality-Display-Vorrichtung einfügen. Die Anzeige der Zielmanövermarkierung erfolgt dergestalt, dass die Zielmanövermarkierung ortsfest im Bereich des Ausführungsortes des Zielmanövers senkrecht auf einer vom Kraftfahrzeug zu befahrenden Fahrspur stehend dargestellt wird. Die Zielmanövermarkierung ist dabei in Querrichtung dabei am Rand der Fahrspur verortet. Zur Verdeutlichung der Annäherung des Kraftfahrzeugs an den Ausführungsort des Zielmanövers ist es sinnvoll, wenn die Zielmanövermarkierung zunehmend größer dargestellt wird. Dabei kann zusätzlich unterhalb einer Grenzdistanz zu einer erweiterten Darstellung der Zielmanövermarkierung gewechselt werden. Bei der Darstellung kann die Zielmanövermarkierung eventuell im Darstellungsbereich vorhandene Objekte oder andere Verkehrsteilnehmer überlagern. Weiterhin kann die Zielmanövermarkierung um eine zusätzliche Navigationsdarstellung ergänzt oder animiert dargestellt werden.

Der Manöverplaner 22 und der Grafikgenerator 23 können von einer Kontrolleinheit 24 gesteuert werden. Über eine Benutzerschnittstelle 27 können gegebenenfalls Einstellungen des Manöverplaners 22, des Grafikgenerators 23 oder der Kontrolleinheit 24 geändert werden. Die in der Vorrichtung 20 anfallenden Daten können bei Bedarf in einem Speicher 25 der Vorrichtung 20 abgelegt werden, beispielsweise für eine spätere Auswertung oder für eine Nutzung durch die Komponenten der Vorrichtung 20. Der Manöverplaner 22, der Grafikgenerator 23 sowie die Kontrolleinheit 24 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU oder einer CPU. Der Eingang 21 und der Ausgang 26 können als getrennte Schnittstellen oder als eine kombinierte bidirektionale Schnittstelle implementiert sein. Im beschriebenen Beispiel ist die Vorrichtung 20 eine eigenständige Komponente. Sie kann aber ebenso im Steuergerät 42 der Augmented-Reality-Display-Vorrichtung integriert sein.

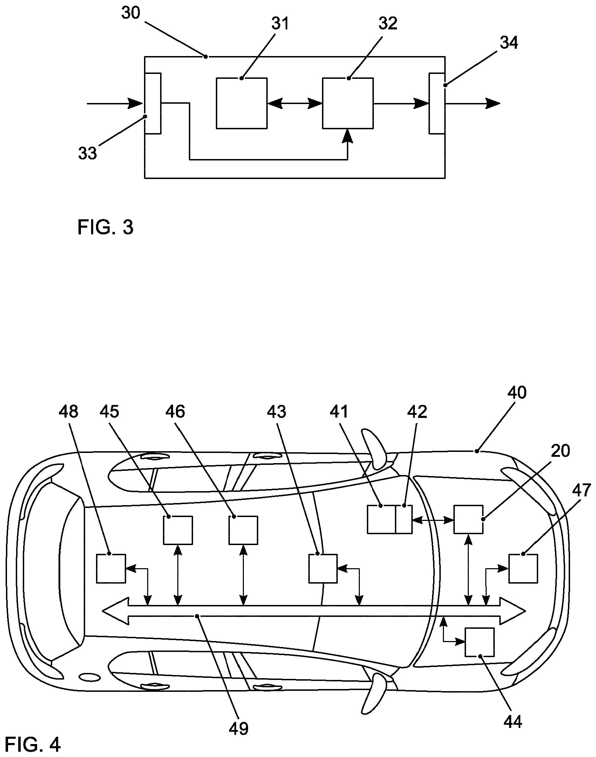

Fig. 3 zeigt eine vereinfachte schematische Darstellung einer zweiten Ausführungsform einer Vorrichtung 30 zur Steuerung einer Anzeige einer Augmented-Reality-Display-Vorrichtung für ein Kraftfahrzeug. Die Vorrichtung 30 weist einen Prozessor 32 und einen Speicher 31 auf. Beispielsweise handelt es sich bei der Vorrichtung 30 um einen Computer oder ein Steuergerät. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Informationen, beispielsweise von Navigationsdaten oder Daten zu einer Umgebung des Kraftfahrzeugs. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 25, 31 der beschriebenen Ausführungsformen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

Fig. 4 stellt schematisch ein Kraftfahrzeug 40 dar, in dem eine erfindungsgemäße Lösung realisiert ist. Das Kraftfahrzeug 40 weist eine Augmented-Reality-Display-Vorrichtung 41 mit einem zugehörigen Steuergerät 42 auf. Weiterhin weist das Kraftfahrzeug 40 eine Vorrichtung 20 zur Steuerung einer Anzeige der Augmented-Reality-Display-Vorrichtung 41 auf. Die Vorrichtung 20 kann natürlich auch in die Augmented-Reality-Display-Vorrichtung 41 oder in das Steuergerät 42 der Augmented-Reality-Display-Vorrichtung 41 integriert sein. Weitere Komponenten des Kraftfahrzeugs 40 sind eine Kamera 43 und ein Sensorsystem 44 zur Umgebungserfassung, ein Navigationssystem 45, eine Datenübertragungseinheit 46 sowie eine Reihe von Assistenzsystemen 47, von denen eines exemplarisch dargestellt ist. Mittels der Datenübertragungseinheit 46 kann eine Verbindung zu Dienstanbietern aufgebaut werden, beispielsweise zum Abrufen von Kartendaten. Zur Speicherung von Daten ist ein Speicher 48 vorhanden. Der Datenaustausch zwischen den verschiedenen Komponenten des Kraftfahrzeugs 40 erfolgt über ein Netzwerk 49.

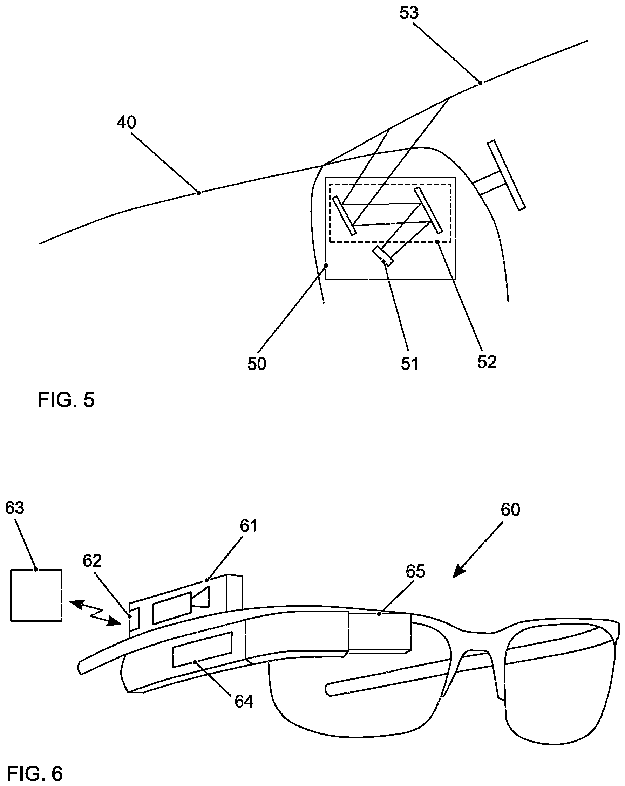

Fig. 5 zeigt schematisch ein Head-up-Display 50 als Beispiel für eine Augmented-Reality-Display-Vorrichtung für ein Kraftfahrzeug 40. Mit Hilfe des Head-up-Displays 50 können Inhalte auf einer Projektionsfläche 53 des Kraftfahrzeugs 40 angezeigt werden, beispielsweise auf der Frontscheibe oder auf einer zusätzlichen Scheibe aus Glas oder Kunststoff, die zwischen dem Fahrer und der Frontscheibe auf dem Armaturenbrett angeordnet ist. Die dargestellten Inhalte werden durch eine bildgebende Einheit 51 erzeugt und mit Hilfe eines optischen Moduls 52 auf die Projektionsfläche 53 projiziert. Typischerweise erfolgt die Projektion dabei in einen Bereich der Frontscheibe oberhalb des Lenkrades. Die bildgebende Einheit 51 kann beispielsweise ein LCD-TFT-Display sein. Das Head-up-Display 50 ist in der Regel in einem Armaturenbrett des Kraftfahrzeugs 40 verbaut. Fig. 6 zeigt schematisch eine Augmented-Reality-Brille 60 als Beispiel für eine Augmented-Reality-Display-Vorrichtung. Die Augmented-Reality-Brille 60 hat eine Kamera 61 zum Erfassen von Umgebungsdaten einer Umgebung der Augmented-Reality-Brille 60. Mittels einer Schnittstelle 62 besteht eine Verbindung zu einer externen Posenbestimmungsvorrichtung 63 zum Bestimmen einer Pose der Augmented-Reality-Brille 60 anhand der Umgebungsdaten. Die Posenbestimmungsvorrichtung 63 kann dazu beispielsweise Kanten oder markante Punkte in den Bilddaten detektieren und auswerten. Die Posenbestimmungsvorrichtung 63 kann natürlich auch Bestandteil der Augmented-Reality-Brille 1 sein. Mittels einer Grafikeinheit 64 kann die Anzeige der Augmented-Reality-Brille 60 entsprechend der ermittelten Pose angepasst werden. Dazu können die Posenbestimmungsvorrichtung 63 und die Grafikeinheit 64 miteinander Daten austauschen. Die Grafikeinheit 64 kann, wie im Beispiel dargestellt, Bestandteil der Augmented-Reality-Brille 60 sein oder über die Schnittstelle 62 mit der Augmented-Reality-Brille 60 verbunden sein. Die von der Grafikeinheit 64 generierte Anzeige wird durch eine Projektionseinheit 65 eingeblendet. Im Beispiel in Fig. 6 wird ein monokulares Display genutzt, d.h. nur vor einem Auge des Nutzers ist ein Display angeordnet. Die vorliegend beschriebene Lösung kann selbstverständlich auch mit einer Augmented-Reality-Brille 60 mit einem binokularen Display, bei dem pro Auge ein Display genutzt wird, oder mit einem binokularen Display, bei dem für beide Augen ein gemeinsames Display genutzt wird, realisiert werden.

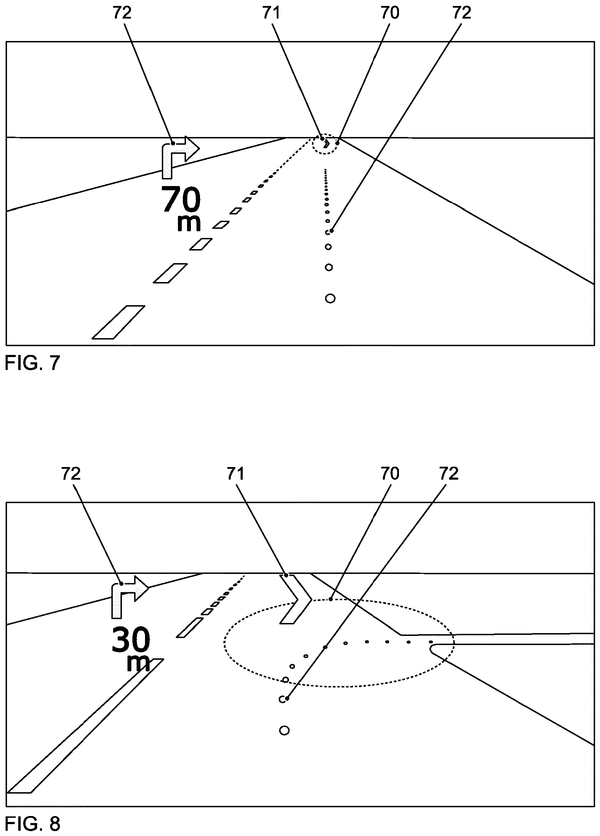

Nachfolgend sollen bevorzugte Ausführungsformen der Erfindung anhand der Figuren 7 bis 10 beschrieben werden.

Fig. 7 zeigt exemplarisch eine Darstellung einer Zielmanövermarkierung 71 in einiger Entfernung vom Fahrzeug. Das Zielmanöver ist ein Abbiegevorgang nach rechts, der Ausführungsort 70, der in der Figur durch eine gestrichelte Ellipse angedeutet ist, liegt in einer Entfernung von 70 m vor dem Fahrzeug. Entsprechend dem auszuführenden Zielmanöver stellt die Zielmanövermarkierung 71 einen stilisierten Pfeil nach rechts dar, der am Ausführungsort 70 senkrecht auf der Straße zu stehen scheint. Aufgrund der Entfernung ist die Zielmanövermarkierung 71 noch recht klein, jedoch für den Fahrer bereits gut erkennbar. Die Straße, in die abgebogen werden soll, ist in dieser Entfernung hingegen noch nicht erkennbar. Im gezeigten Beispiel wird die Zielmanövermarkierung 71 um zusätzliche Navigationsdarstellungen 72 ergänzt, konkret einen Abbiegepfeil mit Entfernungsangabe sowie eine Punktespur zur Verdeutlichung der Fahrspur. Die Punktespur kann dabei so dargestellt werden, dass sie auf der Straße liegt oder über der Straße schwebt.

Fig. 8 zeigt die Darstellung der Zielmanövermarkierung 71 aus Fig. 7 bei Annäherung an den Ausführungsort 70. Die Entfernung zum Ausführungsort 70 beträgt nur noch 30 m, die Straße, in die abgebogen werden soll, sowie die in die Straße führende Punktespur sind inzwischen für den Fahrer erkennbar. Deutlich besser zu erfassen ist allerdings die Zielmanövermarkierung 71, deren Größe entsprechend der geringeren Entfernung deutlich zugenommen hat. In der Figur ist gut zu sehen, dass die Zielmanövermarkierung 71 am Rand der vom Kraftfahrzeug zu befahrenden Fahrspur verortet ist, so dass der Fahrer unmittelbar vor der Zielmanövermarkierung 71 abbiegen muss.

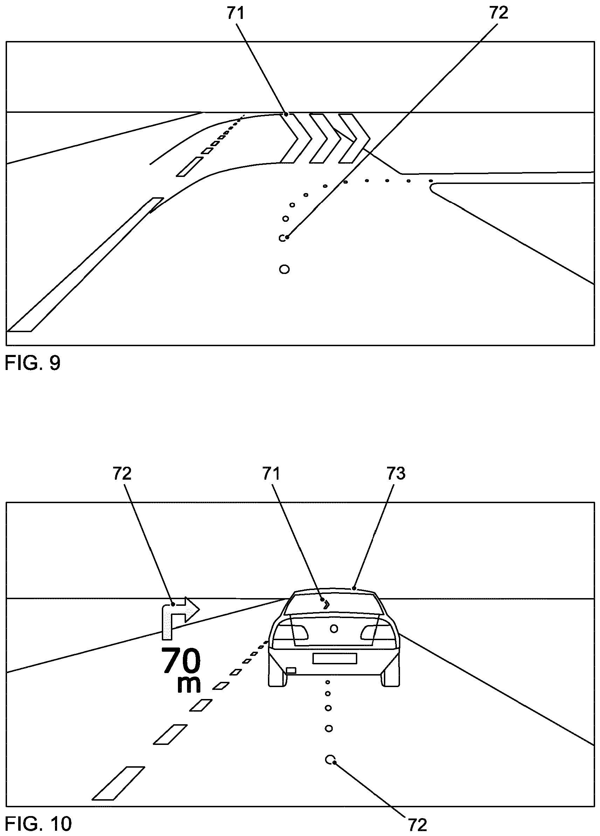

Fig. 9 zeigt die Zielmanövermarkierung 71 nach einem Wechsel zu einer erweiterten Darstellung. In der erweiterten Darstellung wird die ursprüngliche Zielmanövermarkierung 71 um weitere Elemente ergänzt. Im gezeigten Beispiel wurde der stilisierte Abbiegepfeil um zusätzliche Pfeile sowie einen angedeuteten Schweif erweitert. Diese zusätzliche Hervorhebung des Zielmanövers kann kurz vor dem anfallenden Manöver erscheinen, z.B. in einer Entfernung von 10-20 m vor dem Ausführungsort. Die Grenzdistanz, bei der der Wechsel der Darstellung erfolgt, kann vorzugsweise durch den Nutzer festgelegt werden.

Fig. 10 zeigt die Darstellung der Zielmanövermarkierung 71 aus Fig. 7 im Falle eines verdeckenden Objektes. Vor dem Fahrzeug befindet sich ein weiterer Verkehrsteilnehmer 73, hier ein anderes Fahrzeug, das aus Sicht des Fahrers den Ausführungsort des Zielmanövers verdeckt. Dementsprechend wird nur der Teil der Punktespur angezeigt, der nicht vom vorausfahrenden Fahrzeug verdeckt wird. Die Zielmanövermarkierung 71 überlagert hingegen das Fahrzeug, so dass der Fahrer trotz des verdeckten Ausführungsortes über das kommende Zielmanöver informiert ist.

### Bezugszeichenliste

- 10: Bestimmen eines Zielmanövers
- 11: Bestimmen eines Ausführungsortes des Zielmanövers
- 12: Generieren einer Zielmanövermarkierung
- 13: Ausgeben der Zielmanövermarkierung
- 20: Vorrichtung
- 21: Eingang
- 22: Manöverplaner
- 23: Grafikgenerator
- 24: Kontrolleinheit
- 25: Speicher
- 26: Ausgang
- 27: Benutzerschnittstelle
- 30: Vorrichtung
- 31: Speicher
- 32: Prozessor
- 33: Eingang
- 34: Ausgang
- 40: Kraftfahrzeug
- 41: Augmented-Reality-Display-Vorrichtung
- 42: Steuergerät der Augmented-Reality-Display-Vorrichtung
- 43: Kamera
- 44: Sensorsystem
- 45: Navigationssystem
- 46: Datenübertragungseinheit
- 47: Assistenzsystem
- 48: Speicher
- 49: Netzwerk
- 50: Head-up-Display
- 51: Bildgebende Einheit
- 52: Optisches Modul
- 53: Projektionsfläche
- 60: Augmented-Reality-Brille
- 61: Kamera
- 62: Schnittstelle
- 63: Posenbestimmungsvorrichtung
- 64: Grafikeinheit
- 65: Projektionseinheit
- 70: Ausführungsort
- 71: Zielmanövermarkierung
- 72: zusätzliche Navigationsdarstellung
- 73: Verkehrsteilnehmer

## Patentansprüche

1. Verfahren zur Steuerung einer Anzeige einer Augmented-Reality-Display-Vorrichtung (41) für ein Kraftfahrzeug (40), mit den Schritten:
- Bestimmen (10) eines Zielmanövers des Kraftfahrzeugs (40);
- Bestimmen (11) eines Ausführungsortes (70) des Zielmanövers;
- Generieren (12) einer Zielmanövermarkierung (71) für eine Anzeige durch die Augmented-Reality-Display-Vorrichtung (41); und
- Ausgeben (13) der Zielmanövermarkierung (71) zur Anzeige durch die Augmented-Reality-Display-Vorrichtung (41);
**dadurch gekennzeichnet, dass** die Zielmanövermarkierung (71) ortsfest im Bereich des Ausführungsortes (70) des Zielmanövers senkrecht auf einer vom Kraftfahrzeug (40) zu befahrenden Fahrspur stehend und in Querrichtung am Rand der zu befahrenden Fahrspur verortet dargestellt wird.

2. Verfahren gemäß Anspruch 1, wobei die Zielmanövermarkierung (71) dergestalt dargestellt wird, dass sie eventuell im Darstellungsbereich vorhandene Objekte oder andere Verkehrsteilnehmer (73) überlagert.

3. Verfahren gemäß Anspruch 1 oder 2, wobei die Zielmanövermarkierung (71) dergestalt dargestellt wird, dass sie mit Annäherung des Kraftfahrzeugs (40) an den Ausführungsort (70) des Zielmanövers zunehmend größer erscheint.

4. Verfahren gemäß einem der vorherigen Ansprüche, wobei die Zielmanövermarkierung (71) durch zumindest eine zusätzliche Navigationsdarstellung (72) ergänzt wird.

5. Verfahren gemäß einem der vorherigen Ansprüche, wobei die Zielmanövermarkierung (71) bei Annäherung des Kraftfahrzeugs (40) an den Ausführungsort (70) des Zielmanövers unterhalb einer Grenzdistanz zu einer erweiterten Darstellung wechselt.

6. Verfahren gemäß einem der vorherigen Ansprüche, wobei die Zielmanövermarkierung (71) zur Verdeutlichung des auszuführenden Zielmanövers animiert dargestellt wird.

7. Verfahren gemäß einem der vorherigen Ansprüche, wobei die Augmented-Reality-Display-Vorrichtung (41) eine Augmented-Reality-Head-up-Display-Vorrichtung (41) oder eine Datenbrille ist.

8. Computerlesbares Speichermedium mit Instruktionen, die bei Ausführung durch einen Computer den Computer zur Ausführung der Schritte eines Verfahrens gemäß einem der Ansprüche 1 bis 7 zur Steuerung einer Anzeige einer Augmented-Reality-Display-Vorrichtung (41) für ein Kraftfahrzeug (40) veranlassen.

9. Vorrichtung (20) zur Steuerung einer Anzeige einer Augmented-Reality-Display-Vorrichtung (41) für ein Kraftfahrzeug (40), mit
- einem Manöverplaner (22) zum Bestimmen (10) eines Zielmanövers des Kraftfahrzeugs (40) und zum Bestimmen (11) eines Ausführungsortes (70) des Zielmanövers;
- einem Grafikgenerator (23) zum Generieren (12) einer Zielmanövermarkierung (71) für eine Anzeige durch die Augmented-Reality-Display-Vorrichtung (41); und
- einem Ausgang (26) zum Ausgeben (13) der Zielmanövermarkierung (71) zur Anzeige durch die Augmented-Reality-Display-Vorrichtung (41);
**dadurch gekennzeichnet, dass** die Zielmanövermarkierung (71) ortsfest im Bereich des Ausführungsortes (70) des Zielmanövers senkrecht auf einer vom Kraftfahrzeug (40) zu befahrenden Fahrspur stehend und in Querrichtung am Rand der zu befahrenden Fahrspur verortet dargestellt wird.

10. Kraftfahrzeug (40) mit einer Augmented-Reality-Display-Vorrichtung (41), **dadurch gekennzeichnet, dass** das Kraftfahrzeug (40) eine Vorrichtung (20) gemäß Anspruch 9 aufweist oder eingerichtet ist, ein Verfahren gemäß einem der Ansprüche 1 bis 7 zur Steuerung einer Anzeige der Augmented-Reality-Display-Vorrichtung (41) auszuführen.

## Claims

1. Method for controlling a display of an augmented reality display device (41) for a motor vehicle (40), comprising the following steps:
- determining (10) a target maneuver of the motor vehicle (40);
- determining (11) an execution location (70) of the target maneuver;
- generating (12) a target maneuver marking (71) for display by the augmented reality display device (41); and
- outputting (13) the target maneuver marking (71) for display by the augmented reality display device (41);
**characterized in that** the target maneuver marking (71) is displayed in a stationary manner in the region of the execution location (70) of the target maneuver perpendicular to a traffic lane to be traveled by the motor vehicle (40) and located in the transverse direction at the edge of the traffic lane to be traveled.

2. Method according to claim 1, wherein the target maneuver marking (71) is displayed such that it can superimpose objects or other road users (73) present in the display region.

3. Method according to claim 1 or 2, wherein the target maneuver marking (71) is displayed such that it appears increasingly larger when the motor vehicle (40) approaches the execution location (70) of the target maneuver.

4. Method according to any of the preceding claims, wherein the target maneuver marking (71) is supplemented by at least one additional navigation display (72).

5. Method according to any of the preceding claims, wherein the target maneuver marking (71) changes to an enlarged display when the motor vehicle (40) approaches the execution location (70) of the target maneuver below a limit distance.

6. Method according to any of the preceding claims, wherein the target maneuver marking (71) is displayed in an animated manner to illustrate the target maneuver to be executed.

7. Method according to any of the preceding claims, wherein the augmented reality display device (41) is an augmented reality head-up display device (41) or a pair of smartglasses.

8. Computer-readable storage medium having instructions that, when executed by a computer, cause the computer to execute the steps of a method according to any of claims 1 to 7 for controlling a display of an augmented reality display device (41) for a motor vehicle (40).

9. Device (20) for controlling a display of an augmented reality display device (41) for a motor vehicle (40), having
- a maneuver planner (22) for determining (10) a target maneuver of the motor vehicle (40) and for determining (11) an execution location (70) of the target maneuver;
- a graphics generator (23) for generating (12) a target maneuver marking (71) for display by the augmented reality display device (41); and
- an output (26) for outputting (13) the target maneuver marking (71) for display by the augmented reality display device (41);
**characterized in that** the target maneuver marking (71) is displayed in a stationary manner in the region of the execution location (70) of the target maneuver perpendicular to a traffic lane to be traveled by the motor vehicle (40) and located in the transverse direction at the edge of the traffic lane to be traveled.

10. Motor vehicle (40) having an augmented reality display device (41), **characterized in that** the motor vehicle (40) has a device (20) according to claim 9 or is designed to execute a method according to any of claims 1 to 7 for controlling a display of the augmented reality display device (41).

## Revendications

1. Procédé de commande d'un affichage d'un dispositif d'affichage à réalité augmentée (41) pour un véhicule automobile (40), comportant les étapes :
- de détermination (10) d'une manoeuvre cible du véhicule automobile (40) ;
- de détermination (11) d'un lieu de réalisation (70) de la manoeuvre cible ;
- de génération (12) d'un marquage de manoeuvre cible (71) pour un affichage par le dispositif d'affichage à réalité augmentée (41) ; et
- d'émission (13) du marquage de manoeuvre cible (71) pour un affichage par le dispositif d'affichage à réalité augmentée (41) ;
**caractérisé en ce que** le marquage de manoeuvre cible (71) est représenté de manière fixe dans la zone du lieu de réalisation (70) de la manoeuvre cible perpendiculairement sur une voie de circulation devant être parcourue par le véhicule automobile (40) verticalement et localisé dans la direction transversale au niveau du bord de la voie de circulation à parcourir.

2. Procédé selon la revendication 1, dans lequel le marquage de manoeuvre cible (71) est représenté de telle manière qu'il chevauche des objets ou autres usagers de transport (73) éventuellement présents dans la zone de représentation.

3. Procédé selon la revendication 1 ou 2, dans lequel le marquage de manoeuvre cible (71) est représenté de telle manière qu'il apparaît de plus en plus gros en s'approchant du véhicule automobile (40) au niveau du lieu de réalisation (70) de la manoeuvre cible.

4. Procédé selon l'une quelconque des revendications précédentes, dans lequel le marquage de manoeuvre cible (71) est complété par au moins une représentation de navigation (72) supplémentaire.

5. Procédé selon l'une quelconque des revendications précédentes, dans lequel le marquage de manoeuvre cible (71) passe à une représentation étendue en s'approchant du véhicule automobile (40) au niveau du lieu d'exécution (70) de la manoeuvre cible en dessous d'une distance limite.

6. Procédé selon l'une quelconque des revendications précédentes, dans lequel le marquage de manoeuvre cible (71) est représenté animé pour clarifier la manoeuvre cible à réaliser.

7. Procédé selon l'une quelconque des revendications précédentes, dans lequel le dispositif d'affichage à réalité augmentée (41) est un dispositif d'affichage tête haute à réalité augmentée (41) ou des lunettes à données.

8. Support d'enregistrement lisible par ordinateur pourvu d'instructions, lesquelles, lors de leur exécution par un ordinateur, amènent l'ordinateur à exécuter les étapes d'un procédé selon l'une des revendications 1 à 7 pour la commande d'un affichage d'un dispositif d'affichage à réalité augmentée (41) d'un véhicule automobile (40).

9. Dispositif (20) de commande d'un affichage d'un dispositif d'affichage à réalité augmentée (41) pour un véhicule automobile (40), comportant
- un dispositif de planification de manoeuvre (22) destiné à déterminer (10) une manoeuvre cible du véhicule automobile (40) et à déterminer (11) un lieu de réalisation (70) de la manoeuvre cible ;
- un générateur de graphiques (23) pour la génération (12) d'un marquage de manoeuvre cible (71) pour un affichage par le dispositif d'affichage à réalité augmentée (41) ; et
- une sortie (26) pour l'émission (13) du marquage de manoeuvre cible (71) pour un affichage par le dispositif d'affichage à réalité augmentée (41) ;
**caractérisé en ce que** le marquage de manoeuvre cible (71) est représenté de manière fixe dans la zone du lieu de réalisation (70) de la manoeuvre cible perpendiculairement sur une voie de circulation devant être parcourue par le véhicule automobile (40) verticalement et localisé dans la direction transversale au niveau du bord de la voie de circulation à parcourir.

10. Véhicule automobile (40) comportant un dispositif d'affichage à réalité augmentée (41), **caractérisé en ce que** le véhicule automobile (40) présente un dispositif (20) selon la revendication 9 ou est configuré pour exécuter un procédé selon l'une des revendications 1 à 7 pour la commande d'un affichage du dispositif d'affichage à réalité augmentée (41).
